# EUROPÄISCHE PATENTSCHRIFT

(11) **EP 3 694 755 B1**
(45) Veröffentlichungstag und Bekanntmachung des Hinweises auf die Patenterteilung: **28.07.2021**
(21) Anmeldenummer: 18768794.2
(22) Anmeldetag: 30.08.2018
(51) Int. Cl.: B60T 13/26, B60T 13/38, B60T 13/68, B60T 17/22

(54) **ELEKTROPNEUMATISCHES FESTSTELLBREMSMODUL FÜR NUTZFAHRZEUGE MIT FEDERSPEICHER-FESTSTELLBREMSEN**
ELECTROPNEUMATIC PARKING BRAKE MODULE FOR LOAD VEHICLES WITH SPRING BRAKES
MODULE ELECTROMAGNETIQUE DE FREIN DE STATIONNEMENT POUR CAMION AVEC FREINS A RESSORT

(30) Priorität: 14.10.2017 DE 102017009578
(43) Veröffentlichungstag der Anmeldung: 19.08.2020
(73) Patentinhaber: ZF CV Systems Hannover GmbH, 30453 Hannover (DE)
(72) Erfinder: VAN THIEL, Julian, 30938 Grossburgwedel (DE)
(74) Vertreter: Schiller, Harald
(86) Internationale Anmeldenummer: PCT/EP2018/073379
(87) Internationale Veröffentlichungsnummer: WO 2019/072452

(56) Entgegenhaltungen:
- EP-A1- 2 615 003
- EP-B1- 2 121 397
- DE-A1- 10 336 611
- DE-A1-102006 041 011

## Beschreibung

Die Erfindung betrifft ein elektropneumatisches Feststellbremsmodul für Nutzfahrzeuge mit Federspeicher-Feststellbremsen, mit einem Vorratsanschluss zum Anschließen eines Druckluftvorrats, wenigstens einem Federspeicheranschluss zum Anschließen wenigstens eines Federspeicherbremszylinders, einem Anhängersteueranschluss zum Anschluss eines Anhängersteuerventils (TCV), wobei am Anhängersteueranschluss ein Anhängersteuerdruck aussteuerbar ist, einer Einlass-Auslass-Ventileinheit zum Aussteuern eines Federspeicherbremsdrucks am Federspeicheranschluss und einer elektropneumatischen Vorsteuereinheit zum Aussteuern wenigstens eines Steuerdrucks an der Einlass-Auslass-Ventileinheit und zum Ausführen einer Anhängerkontrollstellungsfunktion, wobei die Vorsteuereinheit ein 3/3-Wege-Ventil aufweist, welches eine erste, eine zweite und eine dritte Schaltstellung aufweist, wobei in der zweiten Schaltstellung die Anhängerkontrollstellungsfunktion ausführbar ist.

Solche elektropneumatischen Feststellbremsmodule, auch elektropneumatische Handbrems-Module oder Parkbrems-Module genannt, dienen dazu, sogenannte Feststellbremsen, in der Regel Federspeicherbremsen, eines pneumatischen Bremssystems für ein Nutzfahrzeug zu betätigen.

Federspeicherbremsen können als Feststellbremsen bzw. Parkbremsen verwendet werden und weisen einen federbelasteten Bremsaktuator auf, der drucklos die Bremse zuspannt, sodass beim drucklosen Zustand das Fahrzeug entsprechend gebremst ist. Zum Lösen der Federspeicherbremsen werden diese mit Druckluft beaufschlagt, sodass die Federspeicherbremsen gegen die Kraft der Feder gelöst werden.

In der Regel verfügen solche elektropneumatischen Feststellbremsmodule daher über einen Vorratsanschluss zum Anschließen eines Druckluftvorrats und wenigstens einen Federspeicheranschluss zum Anschließen wenigstens eines Federspeicherbremszylinders. Hierbei ist es denkbar, dass an einen einzigen Federspeicheranschluss des elektropneumatischen Feststellbremsmoduls sämtliche Federspeicherbremszylinder des Nutzfahrzeugs, insbesondere des Triebwagens einer Zugfahrzeug-Anhänger-Kombination, angeschlossen sind. Es ist auch möglich, dass hierfür separate Anschlüsse vorgesehen sind.

In der Regel nutzen derartige elektropneumatische Feststellbremsmodule ein Relaisventil, um den Federspeicheranschluss und somit die Federspeicherbremszylinder mit einem Volumenstrom zu versorgen. Ferner nutzen sie ein bistabiles Ventil, um im Fahrbetrieb und/oder im geparkten Zustand den Zustand der Federspeicherbremszylinder aufrecht zu erhalten, das heißt entweder einen Belüftungszustand oder Entlüftungszustand, ohne hierzu dauerhaft ein elektromagnetisches Ventil bestromen zu müssen.

Wichtig bei solchen elektropneumatischen Feststellbremsmodulen ist, dass der Steuerdruck für den Anhänger im geparkten Zustand aufrechterhalten bleibt. Dies wird üblicherweise über ein separates mono- oder bistabiles elektromagnetisches Ventil erreicht.

Teilweise wurden in elektropneumatischen Parkbremsmodulen auch Ventile mit drei oder mehr Schaltstellungen eingesetzt. So ist beispielsweise aus DE 103 36 611 A1 ein Feststellbremsmodul bekannt, welches ein manuell betätigbares 4/3-Wege-Ventil aufweist. Dieses Handbetätigungsventil kann durch manuelle Betätigung einer Handhabe in eine von drei Schaltstellungen gestellt werden. In der ersten Schaltstellung erfolgt ein Durchlassen eines Drucks zu einer ausgangsseitig mit dem Handbetätigungsventil verbundenen Druckluftleitung, die dann zu einem Relaisventil für den Anhänger und den Bremszylinder führt. Der Ausgang des Relaisventils ist mit sowohl dem Anhängersteueranschluss als auch dem Federspeicheranschluss verbunden.

In einer zweiten Schaltstellung des Handbetätigungsventils ist eine Verbindung der ausgangsseitigen Druckluftleitung zu einem mit der Atmosphäre verbundenen Entlüftungsanschluss herstellbar. Das Relaisventil ist in dieser Stellung entlüftbar. Diese zweite Schaltstellung dient zum manuellen Entlüften des Federspeicheranschlusses zum Zwecke des Einlegens der Feststellbremse. In einer dritten Schaltstellung verhält sich das Handbetätigungsventil neutral, das heißt es erlaubt einen Druckluftdurchfluss zwischen den Druckluftleitungen in beide Richtungen.

EP 2 121 397 B1 offenbart ein Feststellbremsmodul mit einem 3/3-Wege-Ventil, welches entweder eine Abzweigleitung vom Federspeicheranschluss mit dem Anhängersteueranschluss verbindet, den Anhängersteueranschluss direkt mit einem Druckluftvorrat verbindet oder beide Leitungen gegeneinander absperrt. Hierdurch kann eine Anhängerkontrollstellungsfunktion ausgeführt werden.

Bei einer Anhängerkontrollstellungsfunktion wird überprüft, ob die Zugfahrzeug-Anhänger-Kombination auch ausschließlich basierend auf den eingelegten Federspeicher-Feststellbremsen des Zugfahrzeugs steht, ohne zusätzlich eingelegte Betriebsbremsen des Anhängers. Dies wird getan, um das sichere Stehen der Zugfahrzeug-Anhänger-Kombination auch bei beispielsweise aufgrund von Leckage gelösten Betriebsbremsen des Anhängers zu gewährleisten. Üblicherweise sollen in einem abgestellten Zustand der Zugfahrzeug-Anhänger-Kombination die Feststellbremsen des Zugfahrzeugs eingelegt sein, während gleichzeitig durch Aufbau eines entsprechenden Drucks die Betriebsbremsen des Anhängers eingebremst sind. Da Leckage häufig nicht vollständig vermieden werden kann, kann es vorkommen, dass bei einem längeren Abstellzeitraum die Betriebsbremsen des Anhängers nach und nach gelöst werden. Aus diesem Grund werden bei einer Anhängerkontrollstellung temporär die Betriebsbremsen des Anhängers gelöst, während die Federspeicherbremsen des Zugfahrzeugs eingelegt bleiben. Der Fahrer wartet nun einen gewissen Zeitraum ab und prüft, ob sich die Zugfahrzeug-Anhänger-Kombination bewegt. Tut sie dies nicht, kann die Anhängerkontrollstellung beendet werden und die Betriebsbremsen des Anhängers eingelegt werden.

Zu diesem Zweck ist ein Ventil erforderlich, das den Federspeicheranschluss von den Betriebsbremsen, das heißt von dem Anhängersteueranschluss entkoppeln kann.

Ein weiteres Feststellbremsmodul ist aus EP 2 615 003 A1 bekannt. Dieses Feststellbremsmodul ist grundsätzlich ähnlich zu dem aus EP 2 121 397 B1 bekannten, setzt aber nur ein 3/2-Wege-Ventil ein, um den Anhängersteueranschluss wechselseitig mit dem Druckluftvorrat oder dem Anhängersteueranschluss zu verbinden.

Aufgabe der vorliegenden Erfindung ist es, einen einfacheren Aufbau zu erreichen und insbesondere einen Aufbau, bei dem nur ein einziger Steuerdruck verwendet wird und gleichzeitig eine Anhängerkontrollstellungsfunktion ausführbar ist.

Gelöst wird diese Aufgabe dadurch, dass in der ersten Schaltstellung der Vorsteuereinheit der Steuerdruck über das 3/3-Wege-Ventil an der Einlass-Auslass-Ventileinheit aussteuerbar ist, und in der dritten Schaltstellung die Einlass-Auslass-Ventileinheit und der Anhängersteueranschluss mit einer Entlüftung verbunden sind.

Mit dieser Schaltung kann der Steuerdruck über das 3/3-Wege-Ventil an der Einlass-Auslass-Ventileinheit bereitgestellt werden. Derselbe Steuerdruck kann zudem vorzugsweise an dem Anhängersteueranschluss bereitgestellt werden. Durch diese Schaltung lässt sich eine europäische Anhängersteuerung ausführen. Hierzu ist das 3/3-Wege-Ventil vorzugsweise stromlos in der ersten Schaltstellung. Bei der Anhängerkontrollstellungsfunktion wird nicht der Federspeicherbremsdruck oder ein zu diesem proportionaler Druck an dem Anhängersteueranschluss ausgesteuert, sondern ein von diesem unabhängiger Druck, der dazu geeignet ist, ein Lösen von Betriebsbremsen des Anhängers zu bewirken. Vorzugsweise entspricht der bei der Anhängerkontrollstellungsfunktion ausgesteuerte Druck demjenigen, der an dem Anhängersteueranschluss ausgesteuert wird, wenn der Federspeicheranschluss belüftet ist. Es soll verstanden werden, dass die dritte Schaltstellung des 3/3-Wege-Ventils nicht zwangsläufig eine stabile Schaltstellung sein muss. Vorzugsweise sind die ersten und zweiten Schaltstellungen Endlagen des 3/3-Wege-Ventils, und die dritte Schaltstellung ist zwischen den ersten und zweiten Schaltstellungen vorgesehen. Sie kann im Wesentlichen als Schwebestellung oder mittlere Schaltstellung ausgebildet sein.

Durch die Gestaltung des Feststellbremsmoduls mit dem erfindungsgemäßen 3/3-Wege-Ventil kann ein zusätzliches Magnetventil eingespart werden, sodass das Feststellbremsmodul gemäß der vorliegenden Erfindung einen Kostenvorteil gegenüber herkömmlichen Lösungen mit sich bringen kann.

Gemäß einer ersten bevorzugten Ausführungsform ist in der ersten Schaltstellung des 3/3-Wege-Ventils der Anhängersteuerdruck pneumatisch abhängig und in der zweiten Schaltstellung des 3/3-Wege-Ventils unabhängig vom Federspeicherbremsdruck. Vorzugsweise entspricht der Anhängersteuerdruck dem Federspeicherbremsdruck oder ist äquivalent zu diesem, wenn er vom Federspeicherbremsdruck abhängig ist. Hierzu kann vorgesehen sein, dass in der ersten Schaltstellung des 3/3-Wege-Ventils der Anhängersteueranschluss mit dem Federspeicheranschluss verbunden ist oder der Anhängersteueranschluss mit einem Steuereingang eines Relaisventils für den Federspeicheranschluss verbunden ist. Hierdurch wird eine besonders einfache Konstruktion erreicht. In der zweiten Schaltstellung, wenn der Anhängersteuerdruck unabhängig vom Federspeicherbremsdruck ist, kann die Anhängerkontrollstellung ausgeführt werden. Hierzu muss bei der europäischen Anhängersteuerung dann der Anhängersteueranschluss belüftet werden, während der Federspeicheranschluss entlüftet ist, sodass die Federspeicherbremszylinder zugespannt sind.

Weiterhin ist bevorzugt, dass das 3/3-Wege-Ventil einen mit dem Vorratsanschluss verbundenen oder verbindbaren ersten 3/3-Wege-Ventilanschluss, einen mit der Einlass-Auslass-Ventileinheit verbundenen zweiten 3/3-Wege-Ventilanschluss und einen mit der Entlüftung verbundenen dritten 3/3-Wege-Ventilanschluss aufweist. Vorzugsweise ist in der ersten Schaltstellung der erste 3/3-Wege-Ventilanschluss mit dem zweiten 3/3-Wege-Ventilanschluss verbunden, in der zweiten Schaltstellung der zweite 3/3-Wege-Ventilanschluss mit dem dritten 3/3-Wege-Ventilanschluss verbunden und in der dritten Schaltstellung der erste 3/3-Wege-Ventilanschluss mit dem zweiten 3/3-Wege-Ventilanschluss und dem dritten 3/3-Wege-Ventilanschluss verbunden. Auf diese Weise ist es möglich, in der dritten Schaltstellung den Federspeicheranschluss zu entlüften und gleichzeitig den Steuereingang eines der Einlass-Auslass-Ventileinheit, vorzugsweise eines Relaisventils, zu entlüften. Hierdurch ist es möglich, rasch die Bremsen, das heißt sowohl die Feststellbremsen des Zugfahrzeugs als auch die Betriebsbremsen des Anhängers, einzulegen.

Gemäß einer weiteren bevorzugten Ausführungsform weist die Vorsteuereinheit ein Einlassventil auf, wobei das 3/3-Wege-Ventil über das Einlassventil mit dem Vorratsanschluss verbunden ist. Das Einlassventil ist vorzugsweise als 2/2-Wege-Schaltventil ausgebildet und ist stromlos in einer geschlossenen Schaltstellung. Das Einlassventil ist vorzugsweise betreibbar zum Bereitstellen eines Steuerdrucks, der sowohl als Steuerdruck für den Anhängersteueranschluss als auch als Steuerdruck für den Federspeicheranschluss, beispielsweise als Steuerdruck für ein dem Federspeicheranschluss vorgeschaltetes Relaisventil, verwendet wird. Auf diese Weise ist es möglich, nur ein einziges Einlassventil zu verwenden, das einen einzigen Steuerdruck bereitstellt, der dann mittels des 3/3-Wege-Ventils bedarfsweise für den Federspeicheranschluss, den Anhängersteueranschluss oder beide bereitgestellt wird. Auch hierdurch ist es möglich, einen kompakten Aufbau des elektropneumatischen Feststellbremsmoduls zu erreichen, bei dem möglichst wenige Ventile verwendet werden können.

Weiterhin ist bevorzugt, dass der Anhängersteueranschluss über das Einlassventil oder ein weiteres Einlassventil mit dem Vorratsanschluss verbunden ist. Vorzugsweise ist der Anhängersteueranschluss über das Einlassventil mit dem Vorratsanschluss verbunden. Über das Einlassventil kann in diesem Fall direkt der vom Einlassventil ausgesteuerte Steuerdruck am Anhängersteueranschluss als Anhängersteuerdruck bereitgestellt werden.

Alternativ ist es auch möglich, ein weiteres Einlassventil zu diesem Zweck vorzusehen, wobei dann der Nachteil besteht, dass ein weiteres Ventil verwendet wird und der Bauraum also größer werden kann.

Vorzugsweise weist das Einlassventil einen mit dem Vorratsanschluss verbundenen ersten Einlassventilanschluss und ein mit dem 3/3-Wege-Ventil und dem Anhängersteueranschluss verbundenen zweiten Einlassventilanschluss auf. Das heißt, bei Schalten des Einlassventils wird der erste Einlassventilanschluss sowohl mit dem 3/3-Wege-Ventil als auch mit dem Anhängersteueranschluss verbunden. Vorzugsweise ist der zweite Einlassventilanschluss mit dem ersten 3/3-Wege-Ventilanschluss verbunden. In der ersten Schaltstellung des 3/3-Wege-Ventils kann also der vom Einlassventil ausgesteuerte Steuerdruck über das 3/3-Wege-Ventil an der Einlass-Auslass-Ventileinheit und direkt von dem zweiten Einlassventilanschluss aus an dem Anhängersteueranschluss bereitgestellt werden. Die Verwendung eines einzigen Steuerdrucks zum Steuern sowohl der Einlass-Auslass-Ventileinheit als auch des Anhängersteueranschlusses ist hierdurch besonders einfach möglich.

Vorzugsweise weist die Einlass-Auslass-Ventileinheit ein Relaisventil zum Aussteuern des Federspeicherbremsdrucks am Federspeicheranschluss auf. An dem Federspeicheranschluss muss ein Volumendruck ausgesteuert werden, und zu diesem Zweck wird vorzugsweise das Relaisventil eingesetzt. Das Einlassventil steuert den Steuerdruck an der Einlass-Auslass-Ventileinheit und vorzugsweise an dem Relaisventil aus, welches dann den vom Einlassventil ausgesteuerten Steuerdruck volumenverstärkt an dem Federspeicheranschluss bereitstellt.

Vorzugsweise weist das Relaisventil einen Steueranschluss, der mit dem 3/3-Wege-Ventil verbunden ist, auf, sodass von dem 3/3-Wege-Ventil der erste Steuerdruck an dem Steueranschluss aussteuerbar ist.

Vorzugsweise weist das Relaisventil ferner einen Vorratseingang, einen Arbeitsanschluss und einen Entlüftungsanschluss auf, wobei der Vorratseingang mit dem Vorratsanschluss und der Arbeitsanschluss mit dem Federspeicheranschluss verbunden sind.

Weiterhin ist bevorzugt vorgesehen, dass die Einlass-Auslass-Ventileinheit eine Druckweiche zum Aufrechterhalten eines be- oder entlüfteten Zustands des Federspeicheranschlusses aufweist. Im geparkten Zustand des Fahrzeugs ist das 3/3-Wege-Ventil vorzugsweise so geschaltet, dass der Anhängersteuerdruck abhängig vom Federspeicherbremsdruck ist. Auch im normalen Betrieb der Zugfahrzeug-Anhänger-Kombination ist diese Schaltstellung vorzugsweise eingenommen. Das heißt über das elektropneumatische Feststellbremsmodul sind im geparkten Zustand der Zugfahrzeug-Anhänger-Kombination die Betriebsbremsen des Anhängers eingelegt und die Federspeicherbremszylinder des Zugfahrzeugs zugespannt. In diesem Fall ist der Federspeicheranschluss entlüftet, und auch der Anhängersteueranschluss ist entlüftet. Im normalen Fahrbetrieb hingegen sind die Federspeicherbremsen des Zugfahrzeugs gelöst und der Federspeicheranschluss zu diesem Zweck belüftet. Auch der Anhängersteueranschluss ist belüftet, um die Betriebsbremsen des Anhängers in Übereinstimmung mit den Feststellbremsen des Zugfahrzeugs zu lösen.

Sowohl bei der Fahrt als auch im geparkten Zustand kann es aufgrund von Leckage zu einer Änderung des Drucks am Federspeicheranschluss kommen. So ist es denkbar, dass im geparkten Zustand des Fahrzeugs aufgrund einer Leckage vom Vorratsanschluss aus der Federspeicheranschluss nach und nach belüftet wird und so die Federspeicherbremszylinder gelöst werden. Ein äquivalenter Druck würde dann am Anhängersteueranschluss ausgesteuert werden, sodass auch die Betriebsbremsen des Anhängers nach und nach gelöst werden würden. Um dies zu verhindern, ist gemäß dieser Ausführungsform die Druckweiche vorgesehen, die die Einlassventileinheit dazu veranlasst, den Federspeicheranschluss zu belüften, wenn der erste Steuerdruck einen Schwellwert überschreitet und die Einlass-Auslass-Ventileinheit dazu veranlasst, den Federspeicheranschluss zu entlüften, wenn der erste Steuerdruck dem Schwellwert entspricht oder unterschreitet.

Die Druckweiche weist vorzugsweise ein erstes pneumatisch gesteuertes Schaltventil und ein zweites pneumatisch gesteuertes Schaltventil auf. Das erste pneumatisch gesteuerte Schaltventil verbindet den Steueranschluss des Relaisventils mit dem Vorratsanschluss, und das zweite pneumatisch gesteuerte Schaltventil verbindet den Steueranschluss des Relaisventils mit der Entlüftung. Beide pneumatisch gesteuerten Schaltventile sind vorzugsweise mit einer Drossel ausgestattet. Auf diese Weise kann der Federspeicheranschluss permanent entlüftet werden, wenn der Druck unter dem Schwellwert ist, und permanent ein Volumenstrom nachgesteuert werden, wenn der Druck über dem Schwellwert ist. Sowohl ein allmähliches Entlüften als auch ein schlagartiges Entlüften bzw. Belüften wird vermieden.

Weiterhin ist bevorzugt, dass das elektropneumatische Feststellbremsmodul eine elektrische Steuereinheit mit einem elektrischen Anschluss zum Empfangen von Feststellbremssignalen und zum Bereitstellen entsprechender Schaltsignale wenigstens an die Vorsteuereinheit aufweist. Der elektrische Anschluss zum Empfangen von Feststellbremssignalen kann beispielsweise mit einem Fahrzeugbus verbunden sein oder direkt über eine Verkabelung mit einem Parkbrems-Schalter bzw. Handbrems-Schalter in der Fahrerkabine des Fahrzeugs.

Ferner ist vorgesehen, dass das elektropneumatische Feststellbremsmodul einen Drucksensor aufweist, der dazu vorgesehen ist, den Federspeicherbremsdruck zu erfassen und ein entsprechendes Drucksignal bereitzustellen. Vorzugsweise stellt der Drucksensor das Drucksignal an der elektronischen Steuereinheit bereit. Die elektronische Steuereinheit kann das Drucksignal an einen Fahrzeugbus oder dergleichen übergeben oder selbstständig verarbeiten. Über das von dem Drucksensor erfasste Drucksignal kann ermittelt werden, ob die Federspeicherbremszylinder zugespannt oder offen sind.

Ausführungsformen der Erfindung werden nun nachfolgend anhand der Zeichnung beschrieben. Diese soll die Ausführungsformen nicht notwendigerweise maßstäblich darstellen, vielmehr ist die Zeichnung, zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsformen sowie anhand der Zeichnungen; diese zeigen in:
- Fig. 1: ein Blockschaltbild eines elektropneumatischen Feststellbremsmoduls gemäß der Erfindung; und

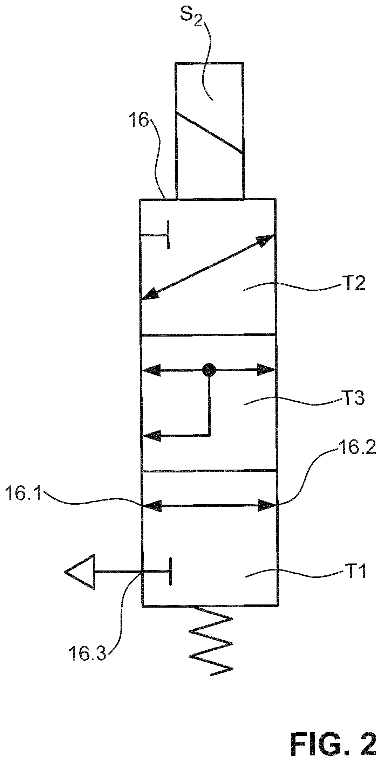

- Fig. 2: eine vergrößerte Darstellung des 3/3-Wege-Ventils.

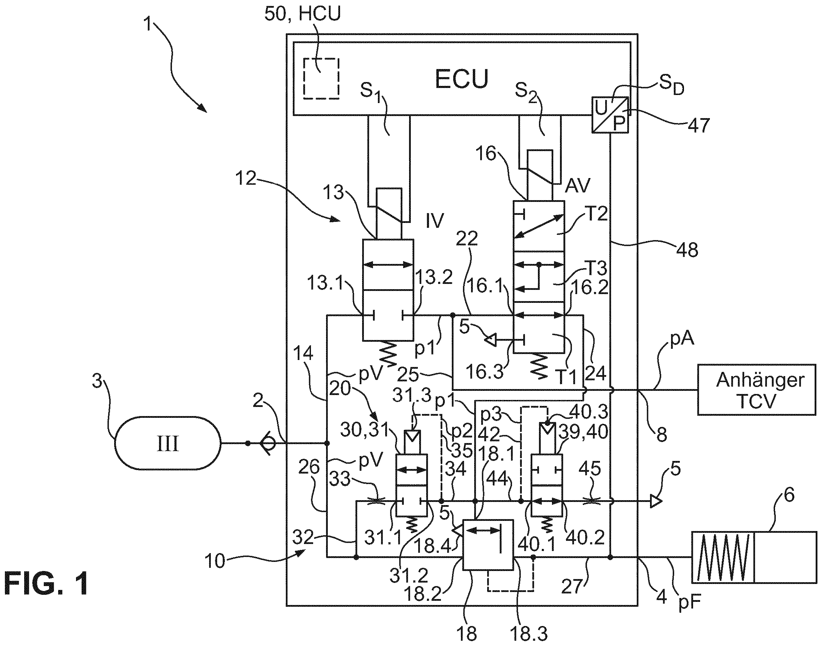

Ein elektropneumatisches Feststellbremsmodul 1 weist einen Vorratsanschluss 2 auf, über den das elektropneumatische Feststellbremsmodul 1 mit einem Druckluftvorrat 3 verbindbar ist. Weiterhin weist das elektropneumatische Feststellbremsmodul 1 einen Federspeicheranschluss 4 zum Anschließen wenigstens eines Federspeicherbremszylinders 6 eines Zugfahrzeugs auf. Auch wenn in Fig. 1 nur ein einzelner Federspeicherbremszylinder 6 gezeigt ist, soll verstanden werden, dass an diesen Anschluss auch mehrere, insbesondere zwei Federspeicherbremszylinder 6 anschließbar sind. Federspeicherbremszylinder 6 sind dem Fachmann allgemein bekannt. Sie verfügen über einen Kolben und eine Feder, wobei die Feder den Federspeicherbremszylinder 6 zuspannt und so Räder des Zugfahrzeugs arretiert. Zum Lösen der Federspeicherbremszylinder 6 sind diese mit einem Federspeicherbremsdruck pF zu beaufschlagen, um die Federspeicherbremszylinder 6 zu lösen.

Ferner weist das elektropneumatische Feststellbremsmodul 1 einen Anhängersteueranschluss 8 auf, an den ein Anhängersteuerventil TCV anschließbar ist. Das Anhängersteuerventil TCV dient dazu, einen Steuer- und/oder einen Arbeitsdruck für den Anhänger der Zugfahrzeug-Anhänger-Kombination bereitzustellen, um die Betriebsbremsen des Anhängers zu steuern. In bestimmten Fahr- oder Parksituationen ist es bevorzugt, dass Betriebsbremsen des Anhängers in Übereinstimmung mit den Federspeicherbremszylindern 6 des Zugfahrzeugs eingebremst werden, sodass ein elektropneumatisches Feststellbremsmodul 1 auch einen Anhängersteuerdruck pA für das Anhängersteuerventil TCV aussteuern kann.

Um den Federspeicheranschluss 4 zu be- oder entlüften, weist das elektropneumatische Feststellbremsmodul 1 gemäß diesem Ausführungsbeispiel (Fig. 1) eine Einlass-Auslass-Ventileinheit 10 auf. Die Einlass-Auslass-Ventileinheit 10 ist in diesem Ausführungsbeispiel rein pneumatisch gesteuert ausgebildet und dient dazu, den Federspeicherbremsdruck pF in Abhängigkeit eines ersten Steuerdrucks p1 auszusteuern. Es kann aber auch Ausführungsformen geben, die elektropneumatische Einlass-Auslass-Ventileinheiten aufweisen.

Der erste Steuerdruck p1 wird von einer Vorsteuereinheit 12 bereitgestellt. Zum Aussteuern des ersten Steuerdrucks p1 weist die Vorsteuereinheit 12 ein Einlassventil 13 auf, welches über eine erste pneumatische Leitung 14 mit dem Vorratsanschluss 2 verbunden ist und Vorratsdruck pV empfängt. Genauer gesagt ist das Einlassventil 13 als 2/2-Wege-Schaltventil ausgebildet und weist einen ersten Einlassventilanschluss 13.1 und einen zweiten Einlassventilanschluss 13.2 auf, wobei der erste Einlassventilanschluss 13.1 mit der ersten pneumatischen Leitung 14 verbunden ist. Das Einlassventil 13 weist eine erste in Fig. 1 gezeigte Schaltstellung und eine zweite in Fig. 1 nicht gezeigte Schaltstellung auf. Die erste Schaltstellung ist eine geschlossene Schaltstellung und die zweite Schaltstellung eine offene Schaltstellung, in der der erste Einlassventilanschluss 13.1 mit dem zweiten Einlassventilanschluss 13.2 verbunden ist. Das Einlassventil 13 ist stromlos in der ersten Schaltstellung. Es ist durch ein erstes Schaltsignal S1, das von einer elektronischen Steuereinheit ECU bereitgestellt wird, von der ersten Schaltstellung in die zweite Schaltstellung verbringbar. Durch Schalten des Einlassventils 13 ist am zweiten Einlassventilanschluss 13.2 der erste Steuerdruck p1 aussteuerbar.

Der erste Steuerdruck p1 wird dann über eine zweite pneumatische Leitung 22 an einem 3/3-Wege-Schaltventil 16 bereitgestellt. Das 3/3-Wege-Schaltventil 16 stellt den ersten Steuerdruck p1 dann je nach Schaltstellung über eine dritte pneumatische Leitung 24 an der Einlass-Auslass-Ventileinheit 10 bereit. Von der zweiten pneumatischen Leitung 22 zweigt eine Anhängersteuerleitung 25 ab, die direkt zum Anhängersteueranschluss 8 verläuft und den ersten Steuerdruck p1 also als Anhängersteuerdruck pA an dem Anhängersteueranschluss 8 bereitstellt.

Das 3/3-Wege-Ventil 16 dient dazu, eine Anhängerkontrollstellungsfunktion auszuführen. Bei der Anhängerkontrollstellungsfunktion soll durch das elektropneumatische Feststellbremsmodul 1 ein Anhängersteuerdruck pA ausgesteuert werden, der nicht übereinstimmt mit dem Federspeicherbremsdruck pF, um so die Betriebsbremsen des Anhängers offen zu lassen, während die Federspeicherbremszylinder 6 des Zugfahrzeugs zugespannt sind. Zu diesem Zweck weist das 3/3-Wege-Ventil 16 einen ersten 3/3-Wege-Ventilanschluss 16.1, einen zweiten 3/3-Wege-Ventilanschluss 16.2 und einen dritten 3/3-Wege-Ventilanschluss 16.3 auf. Der erste 3/3-Wege-Ventilanschluss 16.1 ist mit der zweiten pneumatischen Leitung 22 und so sowohl mit dem Einlassventil 13 als auch mit dem Anhängersteueranschluss 8 verbunden. Der zweite 3/3-Wege-Ventilanschluss 16.2 ist mit der dritten pneumatischen Leitung 24 verbunden, um so den ersten Steuerdruck p1 an der Einlass-Auslass-Ventileinheit 10 bereitzustellen. Der dritte 3/3-Wege-Ventilanschluss 16.3 ist mit einer Entlüftung verbunden.

Das 3/3-Wege-Ventil 16 weist insgesamt drei Schaltstellungen auf, eine erste Schaltstellung T1, eine zweite Schaltstellung T2 und eine dritte Schaltstellung T3. Die Schaltstellungen müssen nicht alle stabil sein, so ist es beispielsweise bevorzugt, dass die dritte Schaltstellung T3 eine Schwebestellung ist. In der ersten Schaltstellung T1 ist der erste 3/3-Wege-Ventilanschluss 16.1 mit dem zweiten 3/3-Wege-Ventilanschluss 16.2 verbunden. In der zweiten Schaltstellung T2 ist der zweite 3/3-Wege-Ventilanschluss 16.2 mit dem dritten 3/3-Wege-Ventilanschluss 16.3 verbunden, sodass die dritte pneumatische Leitung 24 entlüftbar ist. In der dritten Schaltstellung T3 sind alle drei 3/3-Wege-Ventilanschlüsse 16.1, 16.2, 16.3 miteinander verbunden, sodass sowohl die dritte pneumatische Leitung 24 als auch die zweite pneumatische Leitung 22 und damit die Anhängersteuerleitung 25 mit der Entlüftung 5 verbunden sind. Vorzugsweise ist das 3/3-Wege-Ventil 16 stromlos in der ersten Schaltstellung T1. Durch ein zweites Schaltsignal S2 lässt sich das 3/3-Wege-Ventil 16 von der ersten Schaltstellung T1 in die zweite Schaltstellung T2 oder die dritte Schaltstellung T3 schalten. In der ersten Schaltstellung T1 wird der erste Steuerdruck p1 sowohl in die Anhängersteuerleitung 25 als auch über das geöffnete 3/3-Wege-Ventil 16 in die dritte pneumatische Leitung eingesteuert. Auch bei Schließen des Einlassventils 13 sind sowohl der Anhängersteuerdruck pA als auch der Federspeicherbremsdruck pF abhängig, da die dritte pneumatische Leitung 24 über das 3/3-Wege-Ventil 16 mit der Anhängersteuerleitung 25 verbunden ist. Der erste Steuerdruck p1 liegt also sowohl an der Einlass-Auslass-Ventileinheit 10 als auch an dem Anhängersteueranschluss 8 an.

In der zweiten Schaltstellung T2 des 3/3-Wege-Ventils 16 hingegen lässt sich die dritte pneumatische Leitung 24 entlüften, sodass auch der Federspeicheranschluss 4 entlüftbar ist. Wird der Federspeicheranschluss 4 entlüftet, spannen die Federspeicherbremszylinder 6 zu. Eine Verbindung zwischen der Anhängersteuerleitung 25 und der dritten pneumatischen Leitung 24 ist allerdings nicht hergestellt, und über das Einlassventil 13 kann unabhängig vom Druck des Federspeicheranschlusses 4 der Anhängersteuerdruck pA ausgesteuert werden. Der erste 3/3-Wege-Ventilanschluss 16.1 ist abgesperrt, sodass der vom Einlassventil 13 ausgesteuerte Druck ausschließlich in die Anhängersteuerleitung 25 eingesteuert wird. In dieser zweiten Schaltstellung T2 des 3/3-Wege-Ventils 16 kann also ein Anhängersteuerdruck pA ausgesteuert werden, auch wenn der Federspeicheranschluss 4 entlüftet ist. Auf diese Weise lässt sich eine Anhängerkontrollstellung ausführen.

Die dritte Schaltstellung T3 dient dazu, sowohl den Federspeicheranschluss 4 als auch den Anhängersteueranschluss 8 rasch zu entlüften, um so sowohl die Federspeicherbremszylinder 6 als auch die Betriebsbremsen des Anhängers zuzuspannen.

Die Einlass-Auslass-Ventileinheit 10 ist zunächst über eine vierte pneumatische Leitung 26 mit dem Vorratsanschluss 2 verbunden, sodass in der vierten pneumatischen Leitung 26 der Vorratsdruck pV ausgesteuert ist. Die Einlass-Auslass-Ventileinheit 10 weist ferner ein Relaisventil 18 auf, das einen Steueranschluss 18.1, einen Vorratseingang 18.2, einen Arbeitsanschluss 18.3 und einen Entlüftungsanschluss 18.4 aufweist. Der Steueranschluss 18.1 ist mit der dritten pneumatischen Leitung 24 verbunden und empfängt den ersten Steuerdruck p1. Der Entlüftungsanschluss 18.4 ist mit der Entlüftung 5 oder einer Entlüftung verbunden, und der Vorratseingang 18.2 ist mit der vierten pneumatischen Leitung 26 verbunden. Der Arbeitsanschluss 18.3 ist mit einer Federspeicherbremsdruckleitung 27 verbunden, die ihrerseits mit dem Federspeicheranschluss 4 verbunden ist. In der Federspeicherbremsdruckleitung 27 ist der Federspeicherbremsdruck pF ausgesteuert. Das Relaisventil 18 dient dazu, den ersten Steuerdruck p1 zu empfangen und volumenverstärkt den Federspeicherbremsdruck pF in der Federspeicherbremsdruckleitung 27 auszusteuern.

Zum Aufrechterhalten eines be- oder entlüfteten Zustands des Federspeicheranschlusses 4 weist die Einlass-Auslass-Ventileinheit 10 eine Druckweiche 20 auf. Die Druckweiche 20 weist ein Bypassventil 30 auf, welches in diesem Ausführungsbeispiel als 2/2-Wege-Bypassventil 31 ausgebildet ist. Das 2/2-Wege-Bypassventil 31 weist einen ersten Bypassventilanschluss 31.1 und einen zweiten Bypassventilanschluss 31.2 auf. Ferner weist das Bypassventil 30, hier als 2/2-Wege-Bypassventil 31 ausgebildet, einen pneumatischen Bypassventil-Steuereingang 31.3 auf. Der erste Bypassventilanschluss 31.1 ist mit der fünften pneumatischen Leitung 32 verbunden, die von der vierten pneumatischen Leitung 26 abzweigt, sodass an dem ersten Bypassventilanschluss 31.1 der Vorratsdruck pV anliegt. In die fünfte pneumatische Leitung 32 ist allerdings eine erste Drossel 33 eingebaut, die auch in dem Bypassventil 30 vorgesehen sein könnte. Insofern wird der Vorratsdruck pV gedrosselt an dem ersten Bypassventilanschluss 31.1 bereitgestellt. Das Bypassventil 30 weist eine erste, in Fig. 1 gezeigte Schaltstellung und eine zweite, in Fig. 1 nicht gezeigte Schaltstellung auf. In der ersten, in Fig. 1 gezeigten Schaltstellung ist das Bypassventil 30 geschlossen. In der zweiten, in Fig. 1 nicht gezeigten Schaltstellung ist das Bypassventil 30 offen, und der gedrosselte Vorratsdruck wird an dem zweiten Bypassventilanschluss 31.2 bereitgestellt. Dieser ist über eine sechste pneumatische Leitung 34 mit dem Steueranschluss 18.1 des Relaisventils verbunden. Das Bypassventil 30 wird gesteuert durch einen zweiten Steuerdruck p2, der in einer Bypassventilsteuerleitung 35 dem Bypassventil-Steuereingang 31.3 zugeführt wird. Die Bypassventilsteuerleitung 35 zweigt von der sechsten pneumatischen Leitung 34 ab, könnte aber ebenso von der dritten pneumatischen Leitung abzweigen. Wichtig ist, dass in der Bypassventilsteuerleitung 35 der Druck, der am Steueranschluss 18.1 des Relaisventils 18 anliegt, ausgesteuert wird. Das heißt, sobald der am Relaisventil 18 ausgesteuerte erste Steuerdruck p1 einen Schwellwert überschreitet, schaltet das Bypassventil 30 in die in Fig. 1 nicht gezeigte offene Schaltstellung, sodass zusätzlich zu dem ersten Steuerdruck p1 der Vorratsdruck pV gedrosselt an dem Steueranschluss 18.1 des Relaisventils 18 bereitgestellt wird, um so den belüfteten Zustand der Federspeicherbremszylinder 6 aufrechtzuerhalten, auch wenn der vom Einlassventil 13 und 3/3-Wege-Ventil 16 ausgesteuerte Druck absinken sollte. Das Bypassventil 30 steuert den Druck entsprechend nach, um ein schleichendes Entlüften der Federspeicherbremszylinder 6 zu vermeiden.

Um auch den Entlüftungszustand aufrechtzuerhalten, weist die Druckweiche 20 ein Auslassventil 39 auf zum Entlüften der Druckweiche 20 und zum Entlüften des Steueranschlusses 18.1 des Relaisventils 18. Das Auslassventil 39 ist in diesem Ausführungsbeispiel (Fig. 1) als 2/2-Wege-Auslassventil 40 ausgebildet und weist einen ersten Auslassventilanschluss 40.1 und einen zweiten Auslassventilanschluss 40.2 auf. Darüber hinaus weist das Auslassventil 39 einen Auslassventil-Steuereingang 40.3 auf, an dem ein Auslassventil-Steuerdruck p3 aussteuerbar ist. Der Auslassventil-Steuereingang 40.3 ist mit einer Auslassventil-Steuerleitung 42 verbunden, die dazu vorgesehen ist, einen mit dem ersten Steuerdruck p1 äquivalenten Druck als Auslassventil-Steuerdruck p3 an dem Auslassventil-Steuereingang 40.3 auszusteuern. Dazu zweigt die Auslassventil-Steuerleitung 42 von der dritten pneumatischen Leitung 24 bzw. einer siebten pneumatischen Leitung 44 ab, die auch als Auslassleitung bezeichnet werden kann. Der zweite Auslassventilanschluss 40.2 ist mit einer Entlüftung 5 verbunden. Die siebte pneumatische Leitung 44 weist eine zweite Drossel 45 auf, sodass auch die Entlüftung des Steueranschlusses 18.1 des Relaisventils 18 gedrosselt erfolgt. Die zweite Drossel 45 kann auch innerhalb des Auslassventils 39 vorgesehen sein. Das Auslassventil 39 ist umgekehrt geschaltet bezogen auf das Bypassventil 30. Das Auslassventil ist drucklos offen, das heißt, sobald der dritte Steuerdruck p3 einen vorbestimmten Schwellwert unterschreitet, schaltet das Auslassventil 39 in die erste in Fig. 1 gezeigte Schaltstellung. Überschreitete der dritte Steuerdruck p3 hingegen den vorbestimmten Schwellwert, schaltet das Auslassventil 39 in die zweite in Fig. 1 nicht gezeigte Schaltstellung, in der es geschlossen ist.

Das heißt, sobald der erste Steuerdruck p1 unter einen bestimmten Schwellwert fällt, schließt das Bypassventil 30, während gleichzeitig das Auslassventil 39 öffnet. Der Steueranschluss 18.1 des Relaisventils 18 ist dann dauerhaft über die zweite Drossel 45 mit der Entlüftung 5 verbunden, sodass der entlüftete Zustand aufrechterhalten bleibt.

Weiterhin weist das elektropneumatische Feststellbremsmodul 1 einen Drucksensor 47 auf, der dazu vorgesehen ist, den Federspeicherbremsdruck pF zu erfassen. Zu diesem Zweck weist der Drucksensor 47 eine Messleitung 48 auf, die von der Federspeicherbremsdruckleitung 27 abzweigt. Der Drucksensor 47 stellt ein Drucksignal SD an der elektronischen Steuereinheit ECU bereit, sodass basierend auf dem empfangenen Drucksignal SD mittels der elektronischen Steuereinheit ECU bestimmt werden kann, ob die Federspeicherbremszylinder 6 zugespannt oder gelöst sind.

Ferner weist das elektropneumatische Feststellbremsmodul 1, genauer gesagt die elektronische Steuereinheit ECU, einen elektrischen Anschluss 50 auf, über den Parkbremssignale HCU von einem Parkbremsschalter in der Fahrzeugkabine bereitgestellt werden können. Abhängig von den empfangenen Parkbremssignalen HCU ermittelt die elektronische Steuereinheit entsprechende erste und zweite Schaltsignale S1, S2 und stellt diese bedarfsweise an dem Einlassventil 13 und dem 3/3-Wege-Ventil 16 bereit.

## Patentansprüche

1. Elektropneumatisches Feststellbremsmodul (1), mit einem Vorratsanschluss (2) zum Anschließen eines Druckluftvorrats (3), wenigstens einem Federspeicheranschluss (4) zum Anschließen wenigstens eines Federspeicherbremszylinders (6),
einem Anhängersteueranschluss (8) zum Anschluss eines Anhängersteuerventils (TCV), wobei am Anhängersteueranschluss ein Anhängersteuerdruck (pA) aussteuerbar ist, einer Einlass-Auslass-Ventileinheit (10) zum Aussteuern eines Federspeicherbremsdrucks (pF) am Federspeicheranschluss (4), und
einer elektropneumatischen Vorsteuereinheit (12) zum Aussteuern wenigstens eines Steuerdrucks (p1) an der Einlass-Auslass-Ventileinheit (10) und zum Ausführen einer Anhängerkontrollstellungsfunktion,
wobei die Vorsteuereinheit (12) ein 3/3-Wege-Ventil (16) aufweist, welches eine erste, eine zweite und eine dritte Schaltstellung (T1, T2, T3) aufweist, wobei in der zweiten Schaltstellung (T2) die Anhängerkontrollstellungsfunktion ausführbar ist,
**dadurch gekennzeichnet, dass**
- in der ersten Schaltstellung (T1) der Steuerdruck (p1) über das 3/3-Wege-Ventil (16) an der Einlass-Auslass-Ventileinheit (10) aussteuerbar ist, und
- in der dritten Schaltstellung (T3) die Einlass-Auslass-Ventileinheit (10) und der Anhängersteueranschluss (8) mit einer Entlüftung (5) verbunden sind.

2. Elektropneumatisches Feststellbremsmodul (1) nach Anspruch 1, wobei in der ersten Schaltstellung (T1) der Anhängersteuerdruck (pA) pneumatisch abhängig und in der zweiten Schaltstellung (T2) unabhängig vom Federspeicherbremsdrucks (pF) ist.

3. Elektropneumatisches Feststellbremsmodul (1) nacheinem der vorstehenden Ansprüche, wobei das 3/3-Wege-Ventil (16) einen mit dem Vorratsanschluss (2) verbundenen oder verbindbaren ersten 3/3-Wege-Ventilanschluss (16.1), einen mit der Einlass-Auslass-Ventileinheit (10) verbundenen zweiten 3/3-Wege-Ventilanschluss (16.2) und einen mit der Entlüftung (5) verbundenen dritten 3/3-Wege-Ventilanschluss (16.3) aufweist.

4. Elektropneumatisches Feststellbremsmodul (1) nach Anspruch 3, wobei in der ersten Schaltstellung (T1) der erste 3/3-Wege-Ventilanschluss (16.1) mit dem zweiten 3/3-Wege-Ventilanschluss (16.2) verbunden ist, in der zweiten Schaltstellung (T2) der zweite 3/3-Wege-Ventilanschluss (16.2) mit dem dritten 3/3-Wege-Ventilanschluss (16.3) verbunden ist, und in der dritten Schaltstellung (T3) der erste 3/3-Wege-Ventilanschluss (16.1) mit dem zweiten 3/3-Wege-Ventilanschluss (16.2) und dem dritten 3/3-Wege-Ventilanschluss (16.3) verbunden ist.

5. Elektropneumatisches Feststellbremsmodul (1) nach einem der vorstehenden Ansprüche, wobei die Vorsteuereinheit (12) ein Einlassventil (13) aufweist, wobei das 3/3-Wege-Ventil (16) über das Einlassventil (13) mit dem Vorratsanschluss (2) verbunden ist.

6. Elektropneumatisches Feststellbremsmodul (1) nach einem der vorstehenden Ansprüche, wobei der Anhängersteueranschluss (8) über das Einlassventil (13) oder ein weiteres Einlassventil mit dem Vorratsanschluss (2) verbunden ist.

7. Elektropneumatisches Feststellbremsmodul (1) nach Anspruch 5 und 6, wobei das Einlassventil (13) einen mit dem Vorratsanschluss (2) verbundenen ersten Einlassventilanschluss (13.1) und einen mit dem 3/3-Wege-Ventil (16) und dem Anhängersteueranschluss (8) verbundenen zweiten Einlassventilanschluss (13.2) aufweist.

8. Elektropneumatisches Feststellbremsmodul (1) nach Anspruch 3 und 7, wobei der zweite Einlassventilanschluss (13.2) mit dem ersten 3/3-Wege-Ventilanschluss (16.1) verbunden ist.

9. Elektropneumatisches Feststellbremsmodul (1) nach einem der vorstehenden Ansprüche, wobei die Einlass-Auslass-Ventileinheit (10) ein Relaisventil (18) zum Aussteuern des Federspeicherbremsdrucks (pF) am Federspeicheranschluss (4) aufweist.

10. Elektropneumatisches Feststellbremsmodul (1) nach Anspruch 9, wobei das Relaisventil (18) einen Steueranschluss (18.1) aufweist, der mit dem 3/3-Wege-Ventil (16) verbunden ist, sodass von dem 3/3-Wege-Ventil (16) der erste Steuerdruck (p1) an dem Steueranschluss (18.1) aussteuerbar ist.

11. Elektropneumatisches Feststellbremsmodul (1) nach Anspruch 10, wobei das Relaisventil (18) einen Vorratseingang (18.2), einen Arbeitsanschluss (18.3) und einen Entlüftungsanschluss (18.4) aufweist, wobei der Vorratseingang (18.2) mit dem Vorratsanschluss (2) und der Arbeitsanschluss (18.3) mit dem Federspeicheranschluss (4) verbunden sind.

12. Elektropneumatisches Feststellbremsmodul (1) nach einem der vorstehenden Ansprüche, wobei die Einlass-Auslass-Ventileinheit (10) eine Druckweiche (20) zum Aufrechterhalten eines be- oder entlüfteten Zustands des Federspeicheranschluss (4) aufweist.

13. Elektropneumatisches Feststellbremsmodul (1) nach Anspruch 12, wobei die Druckweiche (20) dazu eingerichtet ist, die Einlass-Auslass-Ventileinheit (10) zu veranlassen den Federspeicheranschluss (4) zu belüften, wenn der erste Steuerdruck (p1) einen Schwellwert überschreitet, und die Einlass-Auslass-Ventileinheit (10) zu veranlassen den Federspeicheranschluss (4) zu entlüften, wenn der erste Steuerdruck (p1) dem Schwellwert entspricht oder unterschreitet.

14. Elektropneumatisches Feststellbremsmodul (1) nach einem der vorstehenden Ansprüche, aufweisend eine elektrische Steuereinheit (ECU) mit einem elektrischen Anschluss (50) zum Empfangen von Feststellbremssignalen (HCU) und zum Bereitstellen entsprechender Schaltsignale (S1, S2) wenigstens an die Vorsteuereinheit (12).

15. Elektropneumatisches Feststellbremsmodul (1) nach einem der vorstehenden Ansprüche, aufweisend einen Drucksensor (47), der dazu vorgesehen ist, den Federspeicherbremsdruck (pF) zu erfassen und ein entsprechendes Signal (SD) bereitzustellen.

## Claims

1. An electropneumatic parking brake module (1), comprising:
a supply port (2) configured to connect a compressed air supply (3),
at least one spring brake actuator port (4) configured to connect at least one spring brake cylinder (6),
a trailer control port (8) configured to connect a trailer control valve (TCV), wherein a trailer control pressure (pA) is configured to be controlled at the trailer control port,
an inlet-outlet valve unit (10) configured to control a spring brake pressure (pF) at the at least one spring brake actuator port (4), and
an electropneumatic pilot control unit (12) configured to control at least one control pressure (p1) at the inlet-outlet valve unit (10) and configured to perform a trailer control position function,
wherein the pilot control unit (12) has a 3/3-way valve (16) that has a first switching position, a second switching position, and a third switching position (T1, T2, T3), wherein in the second switching position (T2), the trailer control position function is configured to be carried out,
**characterized in that**
- in the first switching position (T1), the control pressure (p1) is configured to be controlled at the inlet-outlet valve unit (10) via the 3/3-way valve (16), and
- in the third switching position (T3), the inlet-outlet valve unit (10) and the trailer control port (8) are connected to a vent (5).

2. The electropneumatic parking brake module (1) according to claim 1, wherein in the first switching position (T1), the trailer control pressure (pA) is pneumatically dependent on the spring brake pressure (pF), and in the second switching position (T2), the trailer control pressure is independent of the spring brake pressure.

3. The electropneumatic parking brake module (1) according to any of the foregoing claims, wherein the 3/3-way valve (16) has a first 3/3-way valve port (16.1) connected or connectable to the supply port (2), a second 3/3-way valve port (16.2) connected to the inlet-outlet valve unit (10), and a third 3/3-way valve port (16.3) connected to the vent (5).

4. The electropneumatic parking brake module (1) according to claim 3, wherein in the first switching position (T1), the first 3/3-way valve port (16.1) is connected to the second 3/3-way valve port (16.2), in the second switching position (T2), the second 3/3-way valve port (16.2) is connected to the third 3/3-way valve port (16.3), and in the third switching position (T3), the first 3/3-way valve port (16.1) is connected to the second 3/3-way valve port (16.2) and the third 3/3-way valve port (16.3).

5. The electropneumatic parking brake module (1) according to any of the foregoing claims, wherein the pilot control unit (12) has an inlet valve (13), wherein the 3/3-way valve (16) is connected to the supply port (2) via the inlet valve (13).

6. The electropneumatic parking brake module (1) according to any of the foregoing claims, wherein the trailer control port (8) is connected to the supply port (2) via the inlet valve (13) or another inlet valve.

7. The electropneumatic parking brake module (1) according to claim 5 and 6, wherein the inlet valve (13) has a first inlet valve port (13.1) connected to the supply port (2) and a second inlet valve port (13.2) connected to the 3/3-way valve (16) and the trailer control port (8).

8. The electropneumatic parking brake module (1) according to claim 3 and 7, wherein the second inlet valve port (13.2) is connected to the first 3/3-way valve port (16.1) .

9. The electropneumatic parking brake module (1) according to any of the foregoing claims, wherein the inlet-outlet valve unit (10) has a relay valve (18) configured to control the spring brake pressure (pF) at the spring brake actuator port (4).

10. The electropneumatic parking brake module (1) according to claim 9, wherein the relay valve (18) has a control port (18.1) that is connected to the 3/3-way valve (16), so that the first control pressure (p1) at the control port (18.1) is configured to be controlled from the 3/3-way valve (16).

11. The electropneumatic parking brake module (1) according to claim 10, wherein the relay valve (18) has a supply input (18.2), a working connection (18.3), and a vent connection (18.4), wherein the supply input (18.2) is connected to the supply port (2) and the working connection (18.3) is connected to the spring brake actuator port (4).

12. The electropneumatic parking brake module (1) according to any of the foregoing claims, wherein the inlet-outlet valve unit (10) has a pressure switch (20) for maintaining an air supply state or a vented state of the spring brake connection (4).

13. The electropneumatic parking brake module (1) according to claim 12, wherein the pressure switch (20) is configured to cause the inlet-outlet valve unit (10) to apply air to the spring brake actuator port (4) when the first control pressure (p1) exceeds a threshold value, and to cause the inlet-outlet valve unit (10) to vent the spring brake actuator port (4) when the first control pressure (p1) corresponds to the threshold value or falls below the threshold value.

14. The electropneumatic parking brake module (1) according to any of the foregoing claims, comprising an electric control unit (ECU) with an electrical connection (50) configured to receive parking brake signals (HCU) and to provide switching signals (S1, S2) at least to the pilot control unit (12).

15. The electropneumatic parking brake module (1) according to any of the foregoing claims, comprising a pressure sensor (47) provided to detect the spring brake pressure (pF) and to provide a corresponding signal (SD).

## Revendications

1. Module de frein de stationnement électropneumatique (1), avec
un raccord de réserve (2) pour le raccordement d'une réserve d'air comprimé (3),
au moins un raccord d'accumulateur à ressort (4) pour le raccordement d'au moins un cylindre de frein à ressort (6),
un raccord de commande de remorque (8) pour le raccordement d'une soupape de commande de remorque (TCV), dans lequel une pression de commande de remorque (pA) sur le raccord de commande de remorque peut être modulée,
une unité de soupape d'entrée-sortie (10) pour la modulation d'une pression de frein à ressort (pF) sur le raccord d'accumulateur à ressort (4), et
une unité pilote (12) électropneumatique pour la modulation d'au moins une pression de commande (p1) sur l'unité de soupape d'entrée-sortie (10) et pour l'exécution d'une fonction de position de contrôle de remorque,
dans lequel l'unité pilote (12) présente un distributeur 3/3 (16), lequel présente une première, une deuxième et une troisième position de commutation (T1, T2, T3), dans lequel dans la deuxième position de commutation (T2), la fonction de position de contrôle de remorque peut être exécutée,
**caractérisé en ce que**
- dans la première position de commutation (T1), la pression de commande (p1) sur l'unité de soupape d'entrée-sortie (10) peut être modulée par l'intermédiaire du distributeur 3/3 (16), et
- dans la troisième position de commutation (T3), l'unité de soupape d'entrée-sortie (10) et le raccord de commande de remorque (8) sont reliés à un évent (5).

2. Module de frein de stationnement électropneumatique (1) selon la revendication 1, dans lequel dans la première position de commutation (T1), la pression de commande de remorque (pA) est dépendante de manière pneumatique et dans la deuxième position de commutation (T2) indépendante de la pression de frein à ressort (pF).

3. Module de frein de stationnement électropneumatique (1) selon l'une quelconque des revendications précédentes, dans lequel le distributeur 3/3 (16) présente un premier raccord de distributeur 3/3 (16.1) relié ou pouvant être relié au raccord de réserve (2), un deuxième raccord de distributeur 3/3 (16.2) relié à l'unité de soupape d'entrée-sortie (10) et un troisième raccord de distributeur 3/3 (16.3) relié à l'évent (5).

4. Module de frein de stationnement électropneumatique (1) selon la revendication 3, dans lequel dans la première position de commutation (T1), le premier raccord de distributeur 3/3 (16.1) est relié au deuxième raccord de distributeur 3/3 (16.2), dans la deuxième position de commutation (T2), le deuxième raccord de distributeur 3/3 (16.2) est relié au troisième raccord de distributeur 3/3 (16.3), et dans la troisième position de commutation (T3), le premier raccord de distributeur 3/3 (16.1) est relié au deuxième raccord de distributeur 3/3 (16.2) et au troisième raccord de distributeur 3/3 (16.3).

5. Module de frein de stationnement électropneumatique (1) selon l'une quelconque des revendications précédentes, dans lequel l'unité pilote (12) présente une soupape d'admission (13), dans lequel le troisième raccord de distributeur 3/3 (16) est relié au raccord de réserve (2) par l'intermédiaire de la soupape d'admission (13).

6. Module de frein de stationnement électropneumatique (1) selon l'une quelconque des revendications précédentes, dans lequel le raccord de commande de remorque (8) est relié au raccord de réserve (2) par l'intermédiaire de la soupape d'admission (13) ou d'une autre soupape d'admission.

7. Module de frein de stationnement électropneumatique (1) selon la revendication 5 et 6, dans lequel la soupape d'admission (13) présente un premier raccord de soupape d'admission (13.1) relié au raccord de réserve (2) et un deuxième raccord de soupape d'admission (13.2) relié au distributeur 3/3 (16) et au raccord de commande de remorque (8) .

8. Module de frein de stationnement électropneumatique (1) selon la revendication 3 et 7, dans lequel le deuxième raccord de soupape d'admission (13.2) est relié au premier raccord de distributeur 3/3 (16.1).

9. Module de frein de stationnement électropneumatique (1) selon l'une quelconque des revendications précédentes, dans lequel l'unité de soupape d'entrée-sortie (10) présente une soupape relais (18) pour la modulation de la pression de frein à ressort (pF) sur le raccord d'accumulateur à ressort (4) .

10. Module de frein de stationnement électropneumatique (1) selon la revendication 9, dans lequel la soupape relais (18) présente un raccord de commande (18.1), qui est relié au distributeur 3/3 (16), de sorte que la première pression de commande (p1) sur le raccord de commande (18.1) peut être modulée par le distributeur 3/3 (16).

11. Module de frein de stationnement électropneumatique (1) selon la revendication 10, dans lequel la soupape relais (18) présente une entrée de réserve (18.2), un raccord de travail (18.3) et un raccord d'évent (18.4), dans lequel l'entrée de réserve (18.2) est reliée au raccord de réserve (2) et le raccord de travail (18.3) au raccord d'accumulateur à ressort (4).

12. Module de frein de stationnement électropneumatique (1) selon l'une quelconque des revendications précédentes, dans lequel l'unité de soupape d'entrée-sortie (10) présente un pressostat (20) pour le maintien d'un état aéré ou désaéré du raccord d'accumulateur à ressort (4).

13. Module de frein de stationnement électropneumatique (1) selon la revendication 12, dans lequel le pressostat (20) est conçu pour amener l'unité de soupape d'entrée-sortie (10) à aérer le raccord d'accumulateur à ressort (4) lorsque la première pression de commande (p1) dépasse une valeur seuil, et à amener l'unité de soupape d'entrée-sortie (10) à désaérer le raccord d'accumulateur à ressort (4) lorsque la première pression de commande (p1) correspond à la valeur seuil ou ne l'atteint pas.

14. Module de frein de stationnement électropneumatique (1) selon l'une quelconque des revendications précédentes, présentant une unité de commande électrique (ECU) avec un raccord électrique (50) pour la réception de signaux de frein de stationnement (HCU) et pour la fourniture de signaux de commutation (S1, S2) correspondants au moins à l'unité pilote (12) .

15. Module de frein de stationnement électropneumatique (1) selon l'une quelconque des revendications précédentes, présentant un capteur de pression (47), qui est destiné à détecter la pression de frein à ressort (pF) et à fournir un signal (SD) correspondant.
